# EUROPEAN PATENT SPECIFICATION

(11) **EP 0 816 464 B1**
(45) Date of publication and mention of the grant of the patent: **15.03.2000**
(21) Application number: 97304377.1
(22) Date of filing: 23.06.1997
(51) Int. Cl.: C09J 183/04, C09J 183/10

(54) **Silicone pressure sensitive adhesive compositions**
Druckempfindliche Klebemittel auf Silikonbasis
Adhésifs sensibles à la pression à base de silicones

(30) Priority: 05.07.1996 US 675974
(43) Date of publication of application: 07.01.1998
(73) Proprietor: DOW CORNING CORPORATION, Midland, Michigan 48686-0994 (US)
(72) Inventor: Cifuentes, Martin Eric, Midland, Michigan 48640 (US); Fenton, William Neal, Midland, Michigan 48640 (US)
(74) Representative: Kyle, Diana

(56) References cited:
- GB-A- 998 232
- US-A- 3 929 704

## Description

The present invention relates to silicone pressure sensitive adhesive compositions which are prepared by heating a mixture of a polydiorganosiloxane, a silicone resin copolymer and an organic amine compound or metal salt thereof and then by adding an organic peroxide or azo compound to the resultant reaction product.

Silicone pressure sensitive adhesives (SPSA) compositions are typically produced by either blending or condensing together a silicone resin and a silicone polymer. General representations of this prior art are US-As 2,736,721; 2,814,601; 2,857,356; 3,528,940; 3,929,704; 4,831,070; 4,865,920; 5,100,976 and 5,248,739. Foreign prior art is represented by GB-A 998,232 and EP-A 0,459,292.

GB-A 998,232 discloses a process for preparing a SPSA which comprises heating a mixture of a benzene soluble resin copolymer containing SiO₂ units and R₃SiO_{1/2} units, where R is a monovalent hydrocarbon radical, a hydroxyl terminated diorganopolysiloxane liquid having a viscosity of 100 to 100,000 mm²/s (cs) at 25°C. and (3) at least one of the group consisting of primary amines, secondary amines, tertiary amines, carboxylic acid salts of the said amines and quaternary ammonium salts, at a temperature above 100°C. until the desired adhesive character is obtained.

The present invention provides SPSA compositions, which are prepared by reacting a polydiorganosiloxane, a silicone resin copolymer and a weak base catalyst that exhibit high tack while retaining good peel adhesion and cohesive strength.

It is an object of this invention to provide such a composition having a high solids content that also maintains excellent adhesive properties at low viscosities.

It is another object of this invention to provide a SPSA composition that is particularly suitable in adhesive tape constructions.

Our invention is a method for making a SPSA composition comprising the steps of: (I) heating a mixture comprising (A) (i) a hydroxyl-terminated polydiorgano-siloxane having a viscosity of from 100 to 10,000,000 mm²/s at 25°C. or (A)(ii) a mixture of (a) a polydiorganosiloxane and (b) a polydiorganosiloxane selected from (i) polydiorganosiloxanes terminated with monovalent hydrocarbon radicals free of aliphatic unsaturation or (ii) alkenyl-terminated polydiorganosiloxanes, wherein said mixture also has a viscosity of from 100 to 10,000,000 mm²/s at 25°C., (B) a silicone resin which can be dispersed in either a hydrocarbon liquid or a silicone liquid and which comprises R₃SiO_{1/2} siloxane units and SiO_{4/2} units, wherein R is selected from a monovalent hydrocarbon or halohydrocarbon radical free of aliphatic unsaturation and said hydrocarbon or halohydrocarbon radical having from to 20 carbon atoms, an alkenyl radical or a hydroxyl radical and (C) an organic amine compound or carboxylic acid salt or quaternary ammonium salt thereof to form a reaction product; and (II) adding (D) an organic peroxide or azo compound to the reaction product of (I).

The hydroxyl-terminated polydiorganosiloxane of component (A)(i) or (ii) is preferably a polydiorgano-siloxane having the general formula HOR¹₂SiO(R¹₂SiO)ₐSiR¹₂OH wherein each R¹ is independently selected from a monovalent hydrocarbon or halohydrocarbon radical having from 1 to 20 carbon atoms or an alkenyl radical. The monovalent hydrocarbon radicals free of aliphatic unsaturation include alkyl radicals such as methyl, ethyl, propyl, pentyl, octyl, undecyl or octadecyl; cycloaliphatic radicals such as cyclohexyl; aryl radicals such as phenyl, tolyl, xylyl, benzyl or 2-phenylethyl; and chlorinated hydrocarbon radicals such as 3-chloropropyl or dichlorophenyl. The alkenyl radicals of R¹ include vinyl, allyl, butenyl, hexenyl, cyclohexenyl and beta-cyclohexenylethyl. Preferably R¹ is selected from methyl, phenyl or vinyl. Preferably the hydroxyl-terminated polydiorganosiloxane of component (A)(i) or (ii) is a compound in which at least 50%, and preferably at least 85%, of the R¹ radicals are methyl radicals.

The average value of "a" in the formula above is such that it provides a viscosity at 25°C. of 100 to 10,000,000 mm²/s (centistokes), the viscosity being a function of the R¹ radicals on this polymer. It is especially preferred that the average value of "a" is such that it provides a component (A) of a viscosity from 100 to 1,000,000 mm²/s at 25°C., and it is highly preferred that this "a" value provide a viscosity within the range from 1,000 to 500,000 mm²/s at 25°C.

Specific examples of these polydiorganosiloxanes (A)(i) or (ii) are HOMe₂SiO(Me₂SiO)ₐSiMe₂OH, HOMe₂SiO(Me₂SiO)_{0.94a}(Ph₂SiO)_{0.06a}SiMe₂OH, HOPh₂SiO(Me₂SiO)_{0.94a}(Ph₂SiO)_{0.06a}SiPh₂OH, HOMe₂SiO(Me₂SiO)_{0.95a}(MeViSiO)_{0.05a}SiMe₂OH, HOVi₂SiO(Me₂SiO)_{0.95a}(MeViSiO)_{0.05a}SiVi₂OH or HOR₂SiO(Me₂SiO)_{0.88a}(Ph₂SiO)_{0.12a}SiR₂OH, wherein R and "a" are as defined above.

Component (A)(i) or (ii) is also a mixture of a hydroxyl-terminated polydiorganosiloxane and a polydiorgano-siloxane, selected from polydiorganosiloxanes terminated with monovalent hydrocarbon radicals free of aliphatic unsaturation or alkenyl-terminated polydiorganosiloxanes wherein said mixture also has a viscosity of from 100 to 10,000,000 mm²/s at 25°C. The above hydroxyl-terminated polydiorganosiloxane is the same as described above, including preferred embodiments thereof. The monovalent hydrocarbon radicals free of aliphatic unsaturation and the alkenyl radicals are also as described above, including preferred embodiments thereof.

Specific examples of polydiorganosiloxanes terminated with monovalent hydrocarbon radicals free of aliphatic unsaturation include Me₃SiO(Me₂SiO)ₐSiMe₃, Me₃SiO(Me₂SiO)_{0.95a}(MeVisiO)_{0.05a}SiMe₃ or Me₃SiO(Me₂SiO)_{0.5a}(MePhsiO)_{0.5a}SiMe₃ wherein Me, Vi and Ph denote, and hereafter represent, methyl, vinyl and phenyl, respectively. Again, "a" has an average value as defined above.

Specific examples of polydiorganosiloxanes terminated with alkenyl radicals are ViMe₂SiO(Me₂SiO)ₐSiMe₂Vi, ViMe₂SiO(Me₂SiO)_{0.95a}(MePhSiO)_{0.05a}SiMe₂Vi, ViMe₂SiO(Me₂SiO)_{0.98a}(MeViSiO)_{0.02a}SiMe₂Vi, PhMeViSiO(Me₂SiO)ₐSiPhMeVi or PhMeViSiO(Me₂SiO)_{0.8a}(MePhSiO)_{0.1a}(Ph₂SiO)_{0.1a}SiPhMeVi, wherein "a" is as defined above.

In component (A)(i) or (ii), it is also preferred that the sum of phenyl and vinyl radicals not exceed 30% of the silicon atoms. In addition, component (A)(i) or (ii) can comprise trace amounts of siloxane branching sites, such as R²SiO_{3/2} units and SiO_{4/2} units, provided that this component remains flowable. Component (A) is well known in the art and is prepared by known methods.

The amount of component (A)(i) or (ii) in our compositions is preferably from 30 to 50 parts by weight, and more preferably from 38 to 47 parts by weight, per 100 parts by weight of components (A) and (B).

Component (B) of our claimed invention is a "soluble" silicone resin comprising R₃SiO_{1/2} siloxane units (M units) and SiO_{4/2} siloxane units (Q units), wherein R is selected from a monovalent hydrocarbon or halohydrocarbon radical having 1 to 20 carbon atoms, an alkenyl radical or a hydroxyl group, all of which are as described above. By the term "soluble" it is meant that the silicone resin (B) can be dispersed in either a hydrocarbon liquid such as benzene, toluene, xylene and heptane; or in a silicone liquid such as cyclic or linear polydiorganosiloxanes. Preferably this resin is also soluble in component (A) above. Preferably, component (B) is a soluble hydroxy-functional organopolysiloxane resin consisting of M units and Q units. In this resin, the R₃SiO_{1/2} siloxane units are bonded to the SiO_{4/2} units, each of which is bonded to at least one other SiO_{4/2} unit. Some of the SiO_{4/2} units are bonded to hydroxy radicals, resulting in HOSiO_{3/2} units, thereby accounting for the silicon-bonded hydroxyl content of the resin. In addition, the resin may contain a small amount of a low molecular weight material comprised substantially of a neopentamer organopolysiloxane having the formula (R³₃SiO)₄Si.

It is preferable that the hydroxy content of this silicone resin, as determined by ²⁹Si NMR (nuclear magnetic resonance), ranges from 1.0 to 5.0 wt%, and preferably 1.5 to 3.5 wt%, based on the resin solids content. Although resins having less than 1.0 wt% hydroxy can be used in the instant invention, such resins are less favored because the triorganosilyl groups have to be cleaved and because of the hydroxy content introduced during the reaction.

In component (B), the monovalent hydrocarbon radicals free of aliphatic unsaturation and the alkenyl radicals are as defined above, including preferred embodiments thereof. Preferably, R is selected from methyl, phenyl, vinyl or hydroxyl. More preferably, at least one-third, and most preferably nearly all of the R radicals in component (B) are methyl radicals. Examples of preferred R₃SiO_{1/2} siloxane units include Me₃SiO_{1/2}, ViMe₂SiO_{1/2}, PhMe₂SiO_{1/2} and Ph₂MeSiO_{1/2}.

It is preferred that the molar ratio of R₃SiO_{1/2} siloxane units (M) to SiO_{4/2} units (Q) is from 0.5 to 1.3. It is more preferred that this ratio be between 0.6 and 1.0. The above mole ratios of M to Q are easily obtained by ²⁹Si NMR. It is preferred that component (B) also have a number average molecular weight (Mn) of 3,000 to 7,500 when measured by gel permeation chromatography (GPC) against a polydimethylsiloxane standard. It is especially preferred that this Mn is from 3,500 to 6,000.

Component (B) is prepared by well known methods, such as the silica hydrosol capping process of US-A 2,676,182; as modified by US-As 3,627,851 and 3,772,247. Further, component (B) can also be prepared by the cohydrolysis of a trialkyl hydrolyzable silane and alkyl silicate as in US-A 2,857,356.

The amount of component (B) in the compositions of this invention is from 50 to 70 parts by weight, and more preferably from 53 to 62 parts by weight, per 100 parts by weight of components (A) and (B).

Component (C) of our invention is an organic amine compound or a carboxylic acid salt or quaternary ammonium salt. The amine compound is preferably selected from tertiary amines, carboxylic acid salts of organic amines, secondary amines or quaternary ammonium salts. Amines suitable as component (C) include primary amines such as methylamine, ethylamine, propyl amine, hexylamine, butanolamine and butylamine; secondary amines such as dimethylamine, diethylamine, diethanolamine, dipropylamine, dibutylamine, dihexylamine, ethylamylamine, imidazole and propylhexylamine; tertiary amines such as trimethylamine, triethylamine, tripropylamine, tributylamine, trihexylamine, methyldipropylamine, tripropanolamine, pyridine, N-methylimidazole and methylpropylhexylamine. Suitable metal salts of organic amines are carboxylic acid salts of organic amines such as diethylammonium acetate, butylammonium octoate and trimethylammonium laurate; or quaternary ammonium salts such as tetramethylammonium acetate, methylethyldibutylammonium chloride or dioctadecyldimethylammonium chloride. It is highly preferred that component (C) is a tertiary amine.

The amount of component (C) in our claimed compositions is from 0.1 part to 20 parts by weight, and preferably from 0.5 part to 5 parts by weight, per 100 parts by weight of components (A) and (B).

The reaction product of step (I) is made by heating a mixture of components (A), (B) and (C) at a temperature of above 100°C. The mixing of these components is enhanced, if desired, by the use of one or more solvents in the mixture of step (I), such as benzene, toluene, xylene, naphtha and mineral spirits; or alcohols, such as methanol, ethanol, isopropanol, butanol and n-propanol. The amount of solvent, if used, ranges from 10 to 80 parts by weight, per 100 parts by weight of components (A) and (B). The mixture of (A)-(C) is generally heated for up to 4 hours at temperatures of from 150 to 180°C. However, this time and temperature are usually dependent on the selection and concentration of all reaction components. The heating of the mixture of (A)-(C) results in the formation of a reaction product. The reaction is essentially complete when the viscosity of said reaction product begins to level off.

When a solvent is used, it may be necessary to later strip the solvent from the reaction product. Methods of stripping volatile components are well known in the art and need no extensive delineation herein. Any method of removing volatile components can be used, such as molecular stills, rotoevaporators and wipe film evaporators, with the preferred method being rotoevaporators.

The mixture of step (I) can also further comprise a rare earth metal salt of a fatty acid. Examples of rare earth metals suitable for forming this salt include cerium, lanthanum and praseodymium, with cerium being preferred. The fatty acid generally contains 6 to 18 carbon atoms, most preferably 8 carbon atoms. The preferred salt is cerium octoate. These salts are generally used herein to provide our composition with an amount of rare earth metal from 1 to 1000 parts by weight, and preferably from 10 to 250 parts by weight, per one million parts by weight of components (A) and (B). Typically, the rare earth metal salt if used is in the form of a 30 wt% solution, 6 wt% of which is composed of the rare earth metal. Solvents suitable for our rare earth metal solution include hexane, heptane, toluene, xylene, naphtha, mineral spirits and ketones.

The reaction product of step (I) has a solids content of at least 70 wt% and a viscosity of up to 200,000 mPa·s, preferably it has a solids content of at least 75 wt% and a viscosity of up to 150,000 mPa·s; and more preferably it has a solids content of at least 80 wt% and a viscosity of up to 100,000 mPa·s.

In step (II), component (D) (an organic peroxide or azo compound) is added to the reaction product of step (I). Examples of organic peroxides which are suitable as component (D) are diacyl peroxides such as benzoyl peroxide or dichlorobenzoyl peroxide. Benzoyl peroxide has been found herein to be a particularly effective organic peroxide.

Examples of azo compounds suitable as component (D) include azobenzene, azobenzene-p-sulfonic acid, azobisdimethylvaleronitrile, azobisisobutyronitrile or azodine, with azobisisobutyronitrile being preferred. Component (D), when added to the product of step (I), can be added as a solution, for example, in an appropriate solvent such as benzene, toluene, xylene, naphtha, chlorocarbons or mineral spirits.

The amount of Component (D) in our compositions is from 0.1 to 5 parts by weight, and preferably from 1.5 to 3.5 parts by weight, per 100 parts by weight of components (A) and (B).

During or after the formation of our SPSA composition, small amounts of additional ingredients may be added thereto so long as they do not materially affect the desired properties of the claimed composition. These additional ingredients are exemplified by antioxidants, pigments, stabilizers, fillers and the like commonly added to SPSA compositions. It should also be apparent to one skilled in the art that a blend of two reaction products, each having different amounts of components (A), (B) and/or (C), can be initially formed in Step (I) and then this blend can be catalyzed according to Step (II).

The present invention further provides an article of manufacture prepared by (I) applying our SPSA composition to at least one surface of a substrate and (II) heating said composition and substrate to cure the composition. The above process can further comprise (III) contacting a solid support with the substrate having the adhesive composition cured thereon after step (II) whereby the solid support and the substrate are adhered together.

The SPSA compositions of this invention are useful as pressure sensitive adhesives (PSAs) and readily stick to a solid support, whether flexible or rigid. These compositions may be applied to a surface by any suitable means such as rolling, spreading, dipping and spraying and thereafter cured as described above.

The surface of the support, and the substrate to which the support is adhered, may be any known solid material such as metals, like aluminum, silver, copper, iron and their alloys; porous materials such as paper, wood, leather and fabrics; organic polymeric materials such as polyolefins including polyethylene or polypropylene; fluorocarbon polymers such as polytetrafluoroethylene or polyvinylfluoride; silicone elastomers; silicone resins; polystyrene; polyamides such as nylon, polyimides, polyesters and acrylic polymers; painted surfaces, siliceous materials such as concrete, bricks and cinderblocks; or glass such as glass cloth. Porous materials such as glass cloth are often impregnated with a substance that will prevent the migration of a SPSA composition from one surface to another surface of the support. In this regard, it is also well known to chemically or physically treat (for example etching, etc.) or to primecoat (adding a curable polysiloxane) the surface of a substrate prior to application of SPSA compositions to enhance their adhesion. The SPSA compositions of this invention are particularly suited to applications wherein good adhesion to a low energy surface (e.g., polyethylene or Teflon^{TM}) is desired.

The amount of our SPSA composition to be applied to surfaces is that sufficient to render the surface tacky to the touch after removal of any solvent. After application, the adhesive is cured by air drying or heating at temperatures of up to 300°C.

Solid supports bearing the cured compositions of this invention are readily adhered to any solid substrate because our claimed compositions have high tack and good adhesive strength.

Useful articles which are thus prepared include pressure sensitive tapes, labels, emblems and other decorative or informational signs. In particular, these compositions are useful in tapes such as a splicing tape in label and paper stock manufacture or converting. An especially useful article herein is one comprising a flexible or rigid support that withstands extreme temperatures, hot and/or cold and carrying on at least one surface thereof the SPSA compositions of this invention. Such an article makes full use of the stability at high temperatures and the flexibility at low temperatures that our compositions have and achieve.

All parts and percentages in the following are on a weight basis and all measurements were obtained at 25°C. unless otherwise indicated. The molecular weight properties of the polydimethylsiloxane polymers below were determined by GPC in a toluene solvent and using a polydimethylsiloxane standard.

The apparatus and testing procedures used herein are as follows:

Adhesion was measured by applying a 15.2 x 2.5 cm (6 x 1 inch) strip of a Kapton^{TM} or Mylar^{TM} backed adhesive to a clean 5 x 15.2 cm (2 x 6 inch) stainless steel, polyethylene (PE) or Teflon^{TM} panel using two passes of a 2 kg (4.5 lb) rubber-coated roller. The force required to remove the tape from the panel was measured with a Keil Tester at an peel angle of 180° at a rate of 30.5 cm (12 inches) per minute. The values recorded are the average of multiple readings taken during the course of one pull per sample. The Keil Tester is described in TAPPI, Vol. 43, No. 8., pages 164A and 165A (August 1960). The readings are reported in units of g/cm (ounces per inch).

Tack was measured on five 2.5 cm (one-inch) squares of the Kapton^{TM} or Mylar^{TM} backed adhesive using a POLYKEN^{(R)} probe tack tester, available from Testing Machines, Inc., Amityville, NY. The tack tester has a 0.5 cm diameter stainless steel probe. The test procedure used a 20 gram weight, a dwell time of 1.0 second and a pull speed of 0.5 cm per second. The results reported represent the average of at least five readings, expressed in grams.

The cohesive strength of the compositions was measured by devolatilizing non-catalyzed, 2 gram samples of the adhesive compositions at 150°C. for one hour in an aluminum foil container and by then physically tearing the container and the cured film apart. The container halves were next pulled apart. If the film stretched across the torn cup, with rubber-like elongation, the cohesive strength was recorded as "Pass". If the film tore along with the cup and exhibited very little elongation, the result was recorded as "Fail".

The high temperature hold was measured by preparing triplicate samples with the following procedure: To begin, 2.5 cm (one inch) wide strips of 0.05 mm (2 mil) pressure sensitive adhesive films, supported on a 0.025 mm (1 mil) Kapton(R) backing, were applied to a clean, polished, stainless steel panel, in such a way as to provide a 6.5 square centimeter (1 square inch) area of contact between the adhesive tape and the substrate. Contact was maximized by making two passes across the bonded area using a 2 kg (4.5 lb) roller. The steel panel and attached adhesive tape were then vertically mounted and a 1000 gram weight was attached to the bottom of the adhesive strip. The mounted samples were then placed in a 204.4°C. (400°F.) oven and allowed to remain there for a period of five days or until at least two out of the three samples had detached from the steel panel.

Non-volatile content, i.e. percent solids, of an adhesive composition was determined by heating a two gram sample of the material at 150°C. for one hour and expressing the weight of the residue as a percentage of the original sample weight.

The non-volatile content of the MQ resins was determined by mixing 1.5 grams of resin solution with 0.75 gram of a polydimethylsiloxane fluid having a viscosity of 100 mm²/s (centistokes), followed by devolatilization at 150°C. for 2 hours.

Molecular weights of the soluble silicone resins were measured by gel-permeation chromatography (GPC) using a Varian™ TSK 4000 + 2500 columns at 35°C. in a toluene mobile phase at 1 ml/min. Polydimethylsiloxane (PDMS) standards were used for linear regression calibrations. A refractive index detector was used in the GPC measurements employing the PDMS standard calibration.

The resins in the examples were analyzed using ²⁹Si NMR to determine the molar ratios of the (CH₃)₃SiO_{1/2} units (M) to SiO_{4/2} units (Q) in each resin and to determine the hydroxyl content of each resin.

Viscosities were measured in mPa·s (centipoise) (where 1 cP = 1) at room temperature (25°C.) using a Brookfield™ rotating disc viscometer fitted with an LV-4 spindle.

The following materials were employed in preparing the compositions of the examples:

POLYMER A was a hydroxyl-endblocked polydimethylsiloxane fluid having a viscosity of 330,000 mPa·s, a number average molecular weight (Mn) of 90,310 and a weight average molecular weight (Mw) of 174,700.

POLYMER B was a hydroxyl-endblocked polydimethylsiloxane fluid having a viscosity of 150,000 mPa·s, an Mn of 73,820 and an Mw of 138,600.

POLYMER C was a hydroxyl-endblocked polydimethylsiloxane fluid having a viscosity of 55,000 mPa·s, an Mn of 52,910 and an Mw of 101,200.

POLYMER D was a hydroxyl-endblocked polydimethylsiloxane fluid having a viscosity of 15,000 mPa·s, an Mn of 38,200 and an Mw of 68,470.

POLYMER E was a hydroxyl-endblocked polydimethylsiloxane fluid having a viscosity of 2,000 mPa·s, an Mn of 21,490 and an Mw of 37,950.

POLYMER F was a hydroxyl-endblocked polydimethylsiloxane gum having a plasticity of 1.45 mm (58 mils) as measured by ASTM D926-27.

POLYMER G was a hydroxyl-endblocked polydimethylsiloxane fluid having a viscosity of 55,000 mPa·s, an Mn of 56,340 and an Mw of 102,100.

POLYMER H was a hydroxyl-endblocked polydimethylsiloxane gum copolymer containing 4 mole% of MeViSiO repeat units and having a plasticity of 1.5 mm (59 mils) as measured by ASTM D926-27.

RESIN A was a benzene-soluble, siloxane resin consisting of (CH₃)₃SiO_{1/2} (M) units and SiO_{4/2} (Q) units and having an M/Q ratio of 0.78/1.0, a hydroxyl content of 2.9 wt% and the following molecular weight characteristics as determined by GPC in chloroform, using fractionated MQ resin standards and an IR detector, an Mn of 4,300, an Mw of 14,600 and an Mw/Mn of 3.395.

RESIN B was benzene-soluble, siloxane resin consisting of (CH₃)₃SiO_{1/2} (M) units and SiO_{4/2} (Q) units and having an M/Q ratio of 0.76/1.0, a hydroxyl content of 3.0 wt% and the following molecular weight characteristics as determined by GPC in Chloroform, using fractionated MQ resin standards and an IR detector, an Mn of 4,295, an Mw of 14,500 and an Mw/Mn of 3.375.

THERMAL STABILITY ADDITIVE was Ten-Cem™ (a dispersion of a neodecanoate salt of a rare earth metal in mineral spirits having 6% active metals in mineral spirits, available from Mooney Chemicals, Inc., Cleveland, Ohio).

PEROXIDES employed were:

Perkadox(R) PD-50S-ps-a: a 50 wt% 2,4-dichlorobenzoyl peroxide supplied in a proprietary polysiloxane fluid by Akzo Chemical.

Benzoyl peroxide, in granular form and 98% pure was supplied by Aldrich Chemical Company.

### COMPARATIVE EXAMPLE 1

148.8 grams (g) of Resin A, 74.2 g of Polymer A, 77.0 g of toluene and 0.06 g of thermal stability additive were combined and thoroughly blended in a 500ml, three-necked flask equipped with a stirrer, thermometer, condenser and Dean Stark Trap. This mixture was then heated to reflux and maintained at reflux for 2 hours. The resultant product was stripped at atmospheric pressure to a desired non-volatiles content of 75% solids. The viscosity of the resultant composition was determined to be 4,000 mPa·s.

The resultant composition was tested for cohesive strength as described above and failed. Thus, the cohesive strength of said composition was poor.

### COMPARATIVE EXAMPLE 2

148.8 g of Resin A, 74.2 g of Polymer A, 77.0 g of toluene and 0.06 g of thermal stability additive were combined and thoroughly blended in a 500ml, three-necked flack equipped with a stirrer, thermometer, condenser and Dean Stark Trap. This mixture was then heated to reflux and maintained at reflux for 2 hours. The resultant blend was next stripped at atmospheric pressure to a desired non-volatiles content of 75% solids. The viscosity of the resultant PSA was determined to be 4,600 mPa·s.

The resultant composition was then tested for cohesive strength and also failed proving that its cohesive strength was poor.

### EXAMPLE 1

148.8 g of Resin A, 74.2 g of Polymer A, 77.0 g of toluene, 0.06 g of thermal stability additive and 0.9 g of pyridine were combined and thoroughly blended in a three-necked flack equipped with a stirrer, thermometer, condenser and Dean Stark Trap. The mixture was next heated to reflux and maintained at reflux for 2 hours. Any amount of water generated was continuously removed during the reflux step. The resultant product was then stripped at atmospheric pressure to a non-volatiles content of 75% solids. The composition's viscosity was determined to be 23,250 mPa·s.

The resultant composition was subsequently tested for cohesive strength as above and passed. Thus, the cohesive strength of our claimed composition was good.

### EXAMPLE 2

186 g of Resin A, 93.2 g of Polymer B, 20.8 g of toluene, 0.06 g of thermal stability additive and 1.12 g of pyridine were combined and thoroughly blended in a three-necked flack equipped with a stirrer, thermometer, condenser and Dean Stark Trap. The mixture was next heated to reflux and maintained at reflux for 4 hours. Any water generated was continuously removed during the reflux step. The resultant product was then stripped at atmospheric pressure to a desired non-volatiles content of 75% solids. The viscosity of the resultant composition was 18,000 mPa·s.

### EXAMPLE 3

146.3 g of Resin A, 76.8 g of Polymer C, 77.0 g of toluene, 0.06 g of thermal stability additive and 1.8 g of pyridine were blended and heated as in Example 2. The resultant product was next stripped at atmospheric pressure to a desired non-volatiles content of 85% solids. The resultant high solids product was thereafter recovered and stored for later use. The final product was determined to have a viscosity of 54,000 mPa·s.

### EXAMPLE 4

147.5 g of Resin B, 76.4 g of Polymer D, 76.2 g of toluene, 0.06 g of thermal stability additive and 3.6 g of pyridine were blended and heated by the procedure of Example 2. The resultant product was next stripped at atmospheric pressure to a desired non-volatiles content of 85% solids. The resultant composition was recovered and the viscosity was 31,200 mPa·s.

### EXAMPLE 5

146.3 g of Resin A, 76.0 g of Polymer E, 77.7 g of toluene, 0.06 g of thermal stability additive and 3.6 g of pyridine were blended and heated by the procedure of Example 2. The resultant product was next stripped at atmospheric pressure to a desired non-volatiles content of 90% solids. The viscosity of the resultant composition was determined to be 22,500 mPa·s.

### EXAMPLE 6

150.1 g of Resin A, 73.6 g of Polymer D, 76.3 g of toluene, 0.06 g of a thermal stability additive and 3.6 g of pyridine were blended and heated per the procedure of Example 2. The resultant product was next stripped at atmospheric pressure to a desired non-volatiles content of 85% solids. The viscosity of the resultant composition was determined to be 25,000 mPa·s.

### EXAMPLE 7

150.1 g of Resin A, 73.6 g of Polymer D, 76.3 g of toluene, 0.06 g of a thermal stability additive and 4.6 g triethylamine were blended and heated per the procedure of Example 2. The resultant product was next stripped at atmospheric pressure to a desired non-volatiles content of 85% solids. The viscosity of the resultant composition was determined to be 12,000 mPa·s.

### EXAMPLE 8

146.3 g of Resin A, 70.3 g of Polymer D, 6.7 g of Polymer F, 77.4 g of toluene, 0.06 g of a thermal stability additive and 0.9 g of pyridine were blended and heated as in Example 2. The resultant product was next stripped at atmospheric pressure to a desired non-volatiles content of 85% solids. The viscosity of the resultant composition was 45,000 mPa·s.

### EXAMPLE 9

Portions of the adhesive composition samples described in Examples 1-5 and 8 were catalyzed with benzoyl peroxide at a 2% level of peroxide solids based on solids content in said sample. The peroxide was incorporated into the sample as a 10% solution in toluene. The adhesive solution was then cast onto 0.025 mm (1 mil) Kapton(R) film at a thickness sufficient to yield a 0.05 mm (2 mil) cured film. The cast films were devolatilized for 2 minutes at 700C. and then cured for 2 additional minutes at 204°C. The resultant sheets supporting our SPSA coatings were then cut into 2.5 cm (1 inch) wide strips and tested for adhesion and tack. The results are shown in Table 1.

**TABLE 1**

| PSA SAMPLE | ADHESION | TACK |
|---|---|---|
| Ex. 1 | 0.38 kg/cm (34 oz/in) | 811 g/cm² |
| Ex. 2 | 0.37 kg/cm (33 oz/in) | 871 g/cm² |
| Ex. 3 | 0.31 kg/cm (28 oz/in) | 858 g/cm² |
| Ex. 4 | 0.31 kg/cm (28 oz/in) | 781 g/cm² |
| Ex. 5 | 0.25 kg/cm (22 oz/in) | 862 g/cm² |
| Ex. 8 | 0.29 kg/cm (26 oz/in) | 802 g/cm² |

### EXAMPLE 10

Portions of the samples described in Comparative Examples 1 and 2 and Example 1, were catalyzed as described in Example 9 and cast onto 0.05 mm (2 mil) polyester film (Mylar™ A) at a thickness sufficient to yield a 0.05 mm (2 mil) cured film. The cast films were devolatilized for 2 minutes at 70°C. and then cured for 2 additional minutes at 178°C. The resultant sheet supporting the SPSA coatings was then cut into 2.5 cm (1 inch) wide strips and tested for adhesion and tack as above. The results are provided in Table 2.

**TABLE 2**

| PSA SAMPLE | ADHESION | TACK |
|---|---|---|
| Comparative Ex. 1 | 0.67 kg/cm {60 oz/in (#)} | 912 g/cm² |
| Comparative Ex. 2 | 0.66 kg/cm {59 oz/in (#)} | 904 g/cm² |
| Ex. 1 | 0.64 kg/cm {57 oz/in} | 1,143 g/cm² |

| | | |
|---|---|---|
| (#) - denotes cohesive failure on stainless steel panel. | | |

### EXAMPLE 11

Portions of the samples described in Examples 6 and 7 were catalyzed with Perkadox(R) PD-50S-ps-a at a 2% level of peroxide solid based on PSA solids content in the adhesive sample. The adhesive solutions were then cast onto 0.025 mm (1 mil) Kapton(R) film at a thickness sufficient to yield a 0.05 mm (2 mil) cured film. The cast films were devolatilized for 2 minutes at 70°C. and then for 2 additional minutes at 204°C. The resultant sheets supporting the SPSA coatings were then cut into 2.5 cm (1 inch) wide strips and tested for adhesion and tack as described above. Results are provided in Table 3.

**TABLE 3**

| PSA SAMPLE | ADHESION | TACK |
|---|---|---|
| Ex. 6 | 0.29 kg/cm (26 oz/in) | 724 g/cm² |
| Ex. 7 | 0.31 kg/cm (28 oz/in) | 925 g/cm² |

### EXAMPLE 12

Portions of the samples described in Examples 6 and 7 and catalyzed as described in Example 11, were also cast onto 0.05 mm (2 mil) polyester film (Mylar™ A) at a "wet film" thickness sufficient to yield a 0.05 mm (2 mil) cured film. The cast films were devolatilized for 2 minutes at 70°C. and then cured for 2 additional minutes at 178°C. The resultant sheets supporting the SPSA coatings were then cut into 2.5 cm (1 inch) wide strips and tested for adhesion and tack. Results are provided in Table 4.

**TABLE 4**

| PSA SAMPLE | ADHESION | TACK |
|---|---|---|
| Ex. 6 | 0.48 kg/cm (43 oz/in) | 858 g/cm² |
| Ex. 7 | 0.57 kg/cm (51 oz/in) | 1,101 g/cm² |

### EXAMPLE 13

146.3 g of Resin A, 70.3 g of Polymer D, 6.6 g of Polymer F, 77.4 g of toluene, 0.06 g of a thermal stability additive and 3.6 g pyridine were combined and thoroughly blended in a 500 ml, three-necked flask equipped with a stirrer, thermometer, condenser and Dean Stark Trap. The mixture was next heated to reflux and maintained at reflux for 4 hours. Water was continuously removed during the reflux step. The resultant product was then stripped at atmospheric pressure to a desired non-volatiles content of 85% solids. The viscosity of the resultant composition was 59,500 mPa·s.

A portion of the sample described above was then catalyzed with benzoyl peroxide at a 2% level of peroxide solids based on PSA solids content in the adhesive composition sample. The peroxide was incorporated into the sample as a 10% solution in toluene. The adhesive solution was thereafter cast onto 0.025 mm (1 mil) Kapton(R) film at a thickness sufficient to yield a 0.05 mm (2 mil) cured film. The cast film was devolatilized for 2 minutes at 70°C. and then cured for an 2 additional minutes at 204°C. The resultant, laminated film was then cut into 2.5 cm (1 inch) wide strips and evaluated for peel adhesion and probe tack as defined above. The film had a 180° peel adhesion of 0.30 kg/cm (27 oz/in) and the probe tack of the film was 836 g/cm².

### EXAMPLE 14

133.7 g of Resin A, 85.9 g of Polymer C, 80.4 g of toluene, 0.06 g of a thermal stability additive and 4.6 g of triethylamine, were combined and thoroughly blended in a three-necked flask equipped with a stirrer, thermometer, condenser and Dean Stark Trap. The mixture was heated to reflux and maintained at reflux for 4 hours. Water was continuously removed during the reflux step. The resultant product was then stripped at atmospheric pressure to a desired non-volatiles content of 85% solids. The viscosity of the resultant composition was 41,000 mPa·s.

### EXAMPLE 15

174.0 g of Resin A, 56.6 g of Polymer C, 69.3 g of toluene, 0.06 g of a thermal stability additive and 4.6 g of triethylamine, were combined and thoroughly blended in a three-necked flask equipped with a stirrer, thermometer, condenser and Dean Stark Trap. The mixture was next heated to reflux and maintained at reflux for 4 hours. Water was continuously removed during the reflux step. The resultant product was then stripped at atmospheric pressure to a desired non-volatiles content of 85% solids. The viscosity of the resultant composition was 13,900 mPa·s.

### EXAMPLE 16

A SPSA blend was prepared by combining 3 parts of the product of Example 14, per 1 part of the product of Example 15 and by then mixing until a uniform dispersion was obtained. The mixture was then catalyzed using a 10% solution of benzoyl peroxide in methyl ethyl ketone at a peroxide level of 2% based on the solids. The catalyzed solution was then cast onto 0.05 mm (2 mil) polyester film (Mylar™ A) at a thickness sufficient to yield a 0.05 mm (1.9 mil) cured film. The cast film was devolatilized for 2 minutes at 70°C. and then cured for 2 additional minutes at 178°C. The resultant laminated film was then cut into 2.5 cm (1 inch) wide strips and evaluated for peel adhesion and probe tack. The peel adhesion of the film was 0.68 kg/cm (61 oz/in) and the probe tack was 1,250 g/cm².

### EXAMPLE 17

1,463 g of Resin A, 768 g of Polymer G, 777 g of toluene and 0.6 g of an additive intended to improve thermal stability, were combined and blended together until a uniform mixture was obtained. Four adhesive compositions were prepared therefrom, using the same equipment and procedures as above. Each adhesive was formulated and processed using 300 g of this mixture. To each 300 g aliquot was added 4.6 g of triethylamine. Each sample was then heated to reflux and maintained at 125°C. for varied time periods. Each mixture was subsequently stripped to 85% solids and recovered. Viscosity measurements were then taken at room temperature for each composition and documented as a function of time at reflux. The results are shown in Table 5.

**TABLE 5**

| PSA SAMPLE | TIME @ REFLUX | VISCOSITY | NON-VOLATILE CONTENT |
|---|---|---|---|
| 9a | 1 hr. | 24,750 mPa·s | 83.3% |
| 9b | 2 hr. | 31,500 mPa·s | 84.9% |
| 9c | 4 hr. | 23,750 mPa·s | 84.2% |
| 9d | 16 hr. | 32,000 mPa·s | 84.5% |

### EXAMPLE 18

146.3 g of Resin A, 76.4 g of Polymer D, 77.4 g of toluene, 0.06 g of thermal stability additive and 0.9 g of pyridine were blended and heated as in Example 2. The resultant product was next stripped at atmospheric pressure to a desired non-volatiles content of 85% solids. The resultant composition was then recovered and measured to have a viscosity of 14,000 mPa·s. One portion of the adhesive composition was catalyzed with a 2% loading of benzoyl peroxide as in Example 9. A second portion was left uncatalyzed. Both samples were applied to 0.025 mm (1 mil) Kapton(TM) film and thermally exposed for two minutes at 70°C. and then cured for two additional minutes at 204°C. The coated plastic film was cut into 2.5 cm (1 inch) wide strips and evaluated for its high temperature hold by the procedure described above at 204.4°C. (400°F.), which is a good measure of cohesive strength in bulk adhesive. The peroxide cured sample passed after 5 days at the elevated temperature, whereas the uncured samples detached from the steel panel within a few hours after test initiation.

### EXAMPLE 19

146.3 g of Resin A, 76.4 g of Polymer B, 77.4 g of toluene, 0.06 g of a thermal stability additive and 3.6 g of pyridine were blended and heated per the procedure of Example 2. The resultant product was next stripped at atmospheric pressure to a desired non-volatiles content of 85% solids. The viscosity of the resultant product was determined to be 78,000 mPa·s. One portion of the adhesive composition was catalyzed with a 2% loading of benzoyl peroxide as in Example 9. A second portion was left uncatalyzed. Both samples were applied to 0.025 mm (1 mil) Kapton(TM) film and thermally exposed for two minutes at 70°C. and then cured for two additional minutes at 204°C. The coated plastic film was thereafter cut into 2.5 cm (1 inch) wide strips and evaluated for its high temperature as described above, which is a good measure of cohesive strength in bulk adhesive. The peroxide cured sample passed after 5 days at the elevated temperature, whereas the uncured samples detached from the steel panel within a few hours after test initiation.

## Claims

1. A method of making a silicone pressure sensitive adhesive composition comprising the steps of:
(I) heating a mixture comprising:
(A)(i) a hydroxyl-terminated polydiorgano-siloxane having a viscosity of from 100 to 10,000,000 mm²/s at 25°C. or (A)(ii) a mixture of (a) a hydroxyl-terminated polydiorganosiloxane and (b) a polydiorganosiloxane selected from (i) polydiorganosiloxanes terminated with monovalent hydrocarbon radicals free of aliphatic unsaturation or (ii) alkenyl-terminated polydiorganosiloxanes, wherein said mixture also has a viscosity of from 100 to 10,000,000 mm²/s at 25°C.;
(B) a silicone resin which can be dispersed in either a hydrocarbon liquid or a silicone liquid and which comprises R₃SiO_{1/2} siloxane units and SiO_{4/2} units, wherein R is selected from a monovalent hydrocarbon or halohydrocarbon radical free of aliphatic unsaturation and said hydrocarbon or halohydrocarbon radical having from 1 to 20 carbon atoms, an alkenyl radical or a hydroxyl radical; and
(C) an organic amine compound or carboxylic acid salt or quaternary ammonium salt thereof to form a reaction product; and
(ii) adding (D) an organic peroxide or azo compound to the reaction product of (I).

2. A method according to claim 1 wherein the mixture of step (I) further comprises a solvent.

3. A method according to claim 1 or 2 wherein the mixture of step (I) further comprises a rare earth metal salt of a fatty acid.

4. A method according to any of claims 1 to 3, wherein the method further comprises stripping the reaction product of step (I) prior to step (II).

5. A method according to any of claims 1 to 4, wherein the hydroxyl-terminated polydiorganosiloxane is a polydiorgano-siloxane having the general formula HOR¹₂SiO(R¹₂SiO)ₐSiR¹₂OH wherein each R¹ is independently selected from a monovalent hydrocarbon or halohydrocarbon radical having from 1 to 20 carbon atoms or an alkenyl radical and "a" has a value such that the viscosity of said polydiorganosiloxane ranges from 1,000 to 500,000 mm²/s when measured at 25°C.

6. A method according to any of claims 1 to 5, wherein (B) has a number average molecular weight of 3,000 to 7,500.

7. A method according to any of claims 1 to 6, wherein (C) is selected from tertiary amines, carboxylic acid salts of organic amines, secondary amines or quaternary ammonium salts.

8. An article of manufacture obtainable by:
(I) applying the silicone pressure sensitive adhesive composition obtained by the method according to any of claims 1 to 7, to at least one surface of a substrate;
(II) heating said composition and substrate to cure the composition.

9. An article of manufacture according to claim 8 wherein the article is further prepared by (III) contacting a solid support with the substrate having said adhesive composition cured thereon after step (II), whereby the solid support and the substrate are adhered together.

## Patentansprüche

1. Verfahren zur Herstellung einer Siliconhaftkleberzusammensetzung, umfassend die Schritte:
(I) Erwärmen einer Mischung, enthaltend:
(A)(i) ein Polydiorganosiloxan mit endständigen Hydroxylgruppen und einer Viskosität bei 25°C von 100 bis 10.000.000 mm²/s oder
(A)(ii) eine Mischung aus (a) einem Polydiorganosiloxan mit endständigen Hydroxylgruppen und (b) einem Polydiorganosiloxan, ausgewählt aus (i) Polydiorganosiloxanen, die endständige einbindige Kohlenwasserstoffreste, die frei von aliphatischen Ungesättigtheiten sind, aufweisen, oder (ii) Polydiorganosiloxanen mit endständigen Alkenylgruppen, wobei diese Mischung ebenfalls eine Viskosität bei 25°C von 100 bis 10.000.000 mm²/s aufweist,
(B) ein Siliconharz, das entweder in einer Kohlenwasserstoffflüssigkeit oder einer Siliconflüssigkeit dispergiert sein kann und das R₃SiO_{1/2}-Siloxaneinheiten und SiO_{4/2}-Einheiten aufweist, wobei R ausgewählt ist aus einem einbindigen Kohlenwasserstoff- oder Halogenkohlenwasserstoffrest, die frei von aliphatischen Ungesättigtheiten sind, und dieser Kohlenwasserstoff- oder Halogenkohlenwasserstoffrest 1 bis 20 Kohlenstoffatome aufweist, einem Alkenylrest oder einem Hydroxylrest, und
(C) eine organische Aminverbindung oder ein Carbonsäuresalz oder ein quartäres Ammoniumsalz davon, um ein Reaktionsprodukt zu bilden, und
(II) Zugabe von (D) einem organischen Peroxid oder einer Azoverbindung zu dem Reaktionsprodukt von (I).

2. Verfahren nach Anspruch 1, wobei die Mischung der Stufe (I) weiterhin ein Lösungsmittel enthält.

3. Verfahren nach einem der Ansprüche 1 oder 2, wobei die Mischung der Stufe (I) weiterhin ein Seltenerdmetallsalz einer Fettsäure enthält.

4. Verfahren nach einem der Ansprüche 1 bis 3, wobei das Verfahren weiterhin das Strippen des Reaktionsprodukts der Stufe (I) vor der Stufe (II) umfaßt.

5. Verfahren nach einem der Ansprüche 1 bis 4, wobei das Polydiorganosiloxan mit endständigen Hydroxylgruppen ein Polydiorganosiloxan mit der allgemeinen Formel HOR¹₂SiO(R¹₂SiO)ₐSiR¹₂OH ist, worin jedes R¹ unabhängig voneinander ausgewählt ist aus einem einbindigen Kohlenwasserstoff- oder Halogenkohlenwasserstoffrest mit 1 bis 20 Kohlenstoffatomen oder einem Alkenylrest und "a" einen Wert aufweist, so daß die Viskosität dieses Polydiorganosiloxans im Bereich von 1.000 bis 500.000 mm²/s liegt, wenn sie bei 25°C gemessen wird.

6. Verfahren nach einem der Ansprüche 1 bis 5, wobei (B) ein zahlenmittleres Molekulargewicht von 3.000 bis 7.500 aufweist.

7. Verfahren nach einem der Ansprüche 1 bis 6, wobei (C) aus tertiären Aminen, Carbonsäuresalzen organischer Amine, sekundären Aminen oder quartären Ammoniumsalzen ausgewählt ist.

8. Erzeugnis, erhältlich durch:
(I) Aufbringen der Siliconhaftkleberzusammensetzung, die nach dem Verfahren nach einem der Ansprüche 1 bis 7 erhalten wird, auf wenigstens eine Oberfläche eines Substrats,
(II) Erwärmen dieser Zusammensetzung und des Substrats, um die Zusammensetzung zu härten.

9. Erzeugnis nach Anspruch 8, wobei das Erzeugnis weiterhin durch
(III) Inkontaktbringen eines festen Trägers mit dem Substrat nach Stufe (II), das diese darauf gehärtete Kleberzusammensetzung aufweist, wobei der feste Träger und das Substrat miteinander verbunden werden.

## Revendications

1. Un procédé de préparation d'une composition d'adhésif de silicone sensible à la pression, comprenant les étapes suivantes :
(I) chauffer un mélange comprenant :
(A)(i) un polydiorganosiloxane terminé par des groupes hydroxyle ayant une viscosité de 100 à 10 000 000 mm²/s à 25°C ou (A)(ii) un mélange de (a) un polydiorganosiloxane terminé par des groupes hydroxyle et (b) un polydiorganosiloxane choisi parmi (i) les polydiorganosiloxanes terminés par des radicaux hydrocarbonés monovalents exempts d'insaturation aliphatique ou (ii) les polydiorganosiloxanes terminés par des groupes alcényles, ledit mélange ayant également une viscosité de 100 à 10 000 000 mm²/s à 25°C ;
(B) une résine de silicone qui peut être dispersée dans un hydrocarbure liquide ou dans une silicone liquide et qui comprend des motifs siloxanes R₃SiO_{1/2} et des motifs SiO_{4/2}, où R est choisi parmi un radical hydrocarboné ou halogénohydrocarboné monovalent exempt d'insaturation aliphatique, ledit radical hydrocarboné ou halogénohydrocarboné ayant 1 à 20 atomes de carbone, un groupe alcényle ou un groupe hydroxyle ; et
(C) une amine organique ou un sel d'acide carboxylique ou un sel d'ammonium quaternaire de celle-ci, pour former un produit réactionnel ; et
(II) ajouter (D) un peroxyde organique ou un composé azoïque au produit réactionnel de (I).

2. Un procédé selon la revendication 1, dans lequel le mélange de l'étape (I) contient, de plus, un solvant.

3. Un procédé selon la revendication 1 ou 2, dans lequel le mélange de l'étape (I) contient, de plus, un sel de métal des terres rares d'un acide gras.

4. Un procédé selon l'une quelconque des revendications 1 à 3, dans lequel le procédé comprend, de plus, l'élimination des substances volatiles du produit réactionnel de l'étape (I) avant l'étape (II).

5. Un procédé selon l'une quelconque des revendications 1 à 4, dans lequel le polydiorganosiloxane terminé par des groupes hydroxyle est un polydiorganosiloxane ayant la formule générale HOR¹₂SiO(R¹₂SiO)ₐSiR¹₂OH où chaque R¹ est choisi indépendamment parmi un radical hydrocarboné ou halogénohydrocarboné monovalent ayant 1 à 20 atomes de carbone ou un groupe alcényle, et la valeur de "a" est telle que la viscosité dudit polydiorganosiloxane soit comprise entre 1000 et 500 000 mm²/s, telle que mesurée à 25°C.

6. Un procédé selon l'une quelconque des revendications 1 à 5, dans lequel (B) a un poids moléculaire moyen en nombre de 3000 à 7500.

7. Un procédé selon l'une quelconque des revendications 1 à 6, dans lequel (C) est choisi parmi les amines tertiaires, les sels d'acides carboxyliques d'amines organiques, les amines secondaires ou les sels d'ammonium quaternaire.

8. Un article manufacturé pouvant être obtenu par :
(I) application de la composition d'adhésif de silicone sensible à la pression, obtenue par le procédé selon l'une quelconque des revendications 1 à 7, à au moins une surface d'un substrat ;
(II) chauffage de ladite composition et du substrat pour durcir la composition.

9. Un article manufacturé selon la revendication 8, dans lequel l'article est encore préparé par (III) mise en contact d'un support solide avec le substrat sur lequel ladite composition d'adhésif est durcie après l'étape (II), si bien que le support solide et le substrat soient collés ensemble.
